# EUROPÄISCHE PATENTSCHRIFT

(11) **EP 4 003 764 B1**
(45) Veröffentlichungstag und Bekanntmachung des Hinweises auf die Patenterteilung: **01.05.2024**
(21) Anmeldenummer: 20749887.4
(22) Anmeldetag: 30.07.2020
(51) Int. Cl.: B60G 15/06, B60G 17/027

(54) **VORRICHTUNG UND VERFAHREN ZUM VERSTELLEN EINES FUSSPUNKTES EINES FEDERELEMENTS FUER EIN FAHRZEUG**
DEVICE AND METHOD FOR ADJUSTING A BASE OF A SPRING ELEMENT FOR A VEHICLE
DISPOSITIF ET PROCÉDÉ D'AJUSTEMENT D'UN POINT DE BASE D'UN ÉLÉMENT DE RESSORT POUR UN VÉHICULE

(30) Priorität: 31.07.2019 DE 102019120693; 01.08.2019 DE 102019120845
(43) Veröffentlichungstag der Anmeldung: 01.06.2022
(60) Teilanmeldung: 23174767.6
(73) Patentinhaber: Vibracoustic SE, 69469 Weinheim (DE)
(72) Erfinder: BULLING, Dieter, 30900 Wedemark (DE)
(74) Vertreter: Patentanwälte Olbricht Buchhold Keulertz
(86) Internationale Anmeldenummer: PCT/EP2020/071562
(87) Internationale Veröffentlichungsnummer: WO 2021/019040

(56) Entgegenhaltungen:
- DE-A1- 2 545 082
- DE-A1- 4 103 670
- DE-A1-102008 009 795
- DE-A1-102009 031 074
- DE-A1-102012 010 485
- DE-A1-102014 108 241
- DE-B- 1 136 219
- JP-A- S6 056 616
- JP-A- 2001 121 936
- JP-A- 2001 206 035

## Beschreibung

Die Erfindung betrifft eine Vorrichtung zum Verstellen eines Fußpunktes eines Federelements für ein Fahrzeug und ein Verfahren zum Verstellen eines Fußpunktes eines Federelements für ein Fahrzeug.

Bei Fahrzeugen wird die Fahrzeugkarosserie über Fahrzeugfedern mit den Radaufhängungen verbunden. Dies dient dazu, die Räder während der Fahrt nach Stößen, die die Räder und die Radaufhängung in Richtung der Fahrzeugkarosserien bewegen, von der Fahrzeugkarosserie weg zu treiben. Je nach Beladungszustand des Fahrzeugs werden die Fahrzeugfedern unterschiedlich stark gestaucht. Damit verändert sich ebenfalls der Abstand der Räder bzw. der Radaufhängung zu der Fahrzeugkarosserie. Einige, insbesondere zukünftige, Mobilitätskonzepte erfordern, dass das Fahrzeugniveau bei verschiedenen Beladungszuständen konstant gehalten oder gezielt eingestellt werden kann. So wird für die Kühlung und für die optimale Bodenfreiheit bei elektrisch betrieben Fahrzeugen eine optimierte Positionierung zum Fahrtwind benötigt.

Dazu werden Niveauregelungen zum Verstellen einer Position eines Fußpunkts der Fahrzeugfedern verwendet.

Aus der US 3,598,422 sind zum Beispiel hydraulische Fußpunktverschiebungsgeräte für eine Fahrzeugtragfeder an der karosserie- oder radseitigen Anbindung über Hydraulikzylinder mit gleitender Dichtung bekannt. Allerdings sind gleitende Dichtungen aufwendig, teuer in der Herstellung und anfällig bezüglich der Dichtung. Die in der Dichtung auftretende Reibung erhöht den Leistungsbedarf beim Verstellen. Insbesondere bei freistehenden Federn ohne integrierten Stoßdämpfer muss im Hydraulikzylinder eine Linearführungsfunktion realisiert werden, die eine zusätzliche Bauhöhe erfordert.

Während das Dokument DE 11 36 219 B eine Vorrichtung entsprechend dem Oberbegriff des Anspruchs 1 offenbart, beschreiben die Dokumente DE 10 2014 108241 A1, JP 2001 121936 A und DE 10 2009 031074 A1 weitere Vorrichtungen zum Verstellen eines Fußpunktes.

Als Aufgabe der Erfindung kann daher angesehen werden, eine Vorrichtung zum Verstellen eines Fußpunktes eines Federelements für ein Fahrzeug bereitzustellen, die einfach aufgebaut ist, kostengünstig ist und eine hohe Regelgeschwindigkeit für eine Fahrdynamikregelung aufweist.

Hauptmerkmale der Erfindung sind in den Ansprüchen 1 und 6 angegeben. Ausgestaltungen sind Gegenstand der Ansprüche 2 - 5.

Bei einer Vorrichtung zum Verstellen eines Fußpunktes eines Federelements für ein Fahrzeug, die Vorrichtung umfassend ein erstes Wandelement zum Verbinden mit einem Fahrzeug, ein zweites in einem Abstand zum ersten Wandelement angeordnetes Wandelement zum Verbinden mit dem Federelement, und eine zwischen dem ersten Wandelement und dem zweiten Wandelement angeordnete Kammer zum Ändern des Abstands zwischen dem ersten Wandelement und dem zweiten Wandelement mittels einer Änderung eines Volumens der Kammer, wobei die Kammer ein inkompressibles Fluid aufweist und das erste und/ oder zweite Wandelement eine Durchlassöffnung für das inkompressible Fluid zur Kammer umfasst, wobei die Durchlassöffnung mit einer Ein-/Ausbringvorrichtung für das inkompressible Fluid zum Ändern des Volumens der Kammer fluidkommunizierend verbindbar ist, wobei erfindungsgemäß vorgesehen ist, dass die Kammer eine Kammerwand mit mindestens einem sich von dem ersten Wandelement bis zu dem zweiten Wandelement erstreckenden dritten Wandelement aufweist, dessen Masse bei einer Änderung des Volumens der Kammer konstant ist.

Kern der Erfindung ist die Verwendung einer Kammer, deren Kammerwand einen Flächeninhalt aufweist, der bei einer Volumenänderung der Kammer weitestgehend konstant bleibt. D. h. ein drittes Wandelement ist Teil der Kammerwand und erstreckt sich vor und nach einer Volumenänderung mit den gleichen Kontaktpunkten von dem ersten Wandelement bis zum zweiten Wandelement, ohne dass dem dritten Wandelement Bereiche hinzugefügt oder entfernt werden. Die Masse des dritten Wandelements bleibt damit konstant. Damit wird keine gleitende Dichtung benötigt, um bei einer Volumenänderung der Kammer eine Änderung des Flächeninhalts der Kammerwand zu bewirken. Um das Volumen der Kammer zu ändern, wird über die Durchlassöffnung ein inkompressibles Fluid, wie beispielsweise ein Hydrauliköl oder Glykol, in die Kammer eingeleitet oder aus der Kammer entfernt. Die Menge des inkompressiblen Fluids in der Kammer definiert dabei das Volumen der Kammer. Der Flächeninhalt der Oberfläche des inkompressiblen Fluids in der Kammer bleibt dabei weitestgehend konstant, wenn sich die Menge des inkompressiblen Fluids in der Kammer und damit das Volumen des inkompressiblen Fluids ändert. Die Oberfläche des in der Kammer angeordneten inkompressiblen Fluids entspricht dem Flächeninhalt der Kammerwand. Weiter bewirkt eine Volumenänderung der Kammer, dass sich der Abstand zwischen dem ersten Wandelement, das mit dem Fahrzeug verbunden werden kann, und dem zweiten Wandelement, das mit einem Federelement für ein Fahrzeug, zum Beispiel einer Fahrzeugfeder, verbunden werden kann, ändert. Eine Volumenvergrö-ßerung der Kammer bewirkt dabei eine Vergrößerung des Abstands, während eine Volumenverkleinerung der Kammer eine Verkleinerung des Abstands bewirkt. Das in der Kammer angeordnete inkompressible Fluid bewirkt dabei, dass eine Volumenänderung der Kammer nicht durch äußere Kräfte, die bei Fahrzeugen auftreten, bewirkt wird. Das erste Wandelement und das zweite Wandelement können weiter beispielsweise einander gegenüberliegend angeordnet sein, d. h. auf zwei gegenüberliegenden Seiten der Kammer positioniert sein. Auf diese Weise kann die Position eines Fußpunkts eines Federelements eines Fahrzeugs verändert werden, um das Fahrzeugniveau zu ändern. Da keine gleitende Dichtung benötigt wird, ist die Vorrichtung einfach aufgebaut und kostengünstig. Weiter wird durch die Verwendung des inkompressiblen Fluids eine hohe Regelgeschwindigkeit für eine Fahrdynamikregelung bereitgestellt, da das inkompressible Fluid mit hoher Geschwindigkeit in bzw. aus der Kammer geleitet werden kann.

Eine Verbindung mit der Fahrzeugkarosserie kann auch über eine Radaufhängung erfolgen. D. h., die Vorrichtung kann zwischen dem Federelement und der Fahrzeugkarosserie oder zwischen dem Federelement und einer Radaufhängung angeordnet sein.

Gemäß einem nicht erfindungsgemäßen Beispiel kann die Kammerwand das erste Wandelement und das zweite Wandelement umfassen.

Das erste Wandelement und das zweite Wandelement können in diesem nicht erfindungsgemä-ßen Beispiel damit ebenfalls Teil der der Kammerwand sein. Weiter wird damit die Herstellung der Kammer vereinfacht, sodass Kosten gespart werden können.

Gemäß einem Beispiel weist das dritte Wandelement mindestens ein verformbares Wandelement auf, das biegeweich und zugsteif ist und sich zwischen dem ersten Wandelement und dem zweiten Wandelement erstreckt.

Mit dem verformbaren Wandelement kann auf einfache Weise eine Kammerwand bereitgestellt werden, deren Flächeninhalt bei einer Volumenänderung der Kammer konstant bleibt, wenn die Menge des inkompressiblen Fluids in der Kammer geändert wird. Damit weist die Kammerwand ein Wandelement auf, das in Kombination mit dem inkompressiblen Fluid in der Kammer in der Hauptwirkrichtung der Kammer zwischen dem ersten Wandelement und dem zweiten Wandelement steif ist, aber nachgiebig gegen Verschiebungen oder Verkippungen des ersten Wandelements und des zweiten Wandelements zueinander ist. Damit können Kräfte außerhalb der Hauptlastrichtung, Kraftwirkrichtungen und Kraftverteilungen zwischen der Fahrzeugkarosserie und dem Federelement ausgeglichen werden.

Gemäß einem weiteren Beispiel kann das dritte Wandelement jeweils mittels eines Dichtelements mit dem ersten Wandelement und dem zweiten Wandelement verbunden sein.

Damit kann die Kammer zum Beispiel aus mehreren Wandelementen hergestellt sein, die mittels Dichtelementen miteinander verbunden werden. Damit wird eine Kammer bereitgestellt, die einfach herzustellen ist und eine ausreichende Dichtigkeit aufweist.

Weiter kann das mindestens eine dritte Wandelement beispielsweise ein fluiddichtes Gewebe oder eine gewebe- und/oder faserverstärkte Membran, vorzugsweise eine armierte Elastomer-Membran, aufweisen.

Das dritte Wandelement kann dabei balgförmig, zum Beispiel als Faltenbalg, ausgebildet sein. Damit wird ein kostengünstiges verformbares Wandelement bereitgestellt.

Die Kammer kann gemäß einem weiteren nicht erfindungsgemäßen Beispiel zwei einander gegenüberliegend angeordnete verformbare Wandelemente aufweisen.

Die Kammer kann in diesem nicht erfindungsgemäßen Beispiel mittels der ersten und zweiten Wandelemente und der beiden einander gegenüberliegend angeordneten verformbaren Wandelemente definiert werden. Auf diese Weise kann zum Beispiel eine torusförmige Kammer bereitgestellt werden, die mittig eine Öffnung aufweist, durch die zum Beispiel ein Stoßdämpferelement geführt werden kann. Dabei können das erste Wandelement und das zweite Wandelement beispielsweise ringförmig ausgebildet sein. Das Stoßdämpferelement kann dann durch die Öffnungen der Ringe des ersten Wandelements und des zweiten Wandelements angeordnet werden. Auf diese Weise kann eine Vorrichtung mit einer torusförmigen Kammer mit ringförmigen ersten und zweiten Wandelementen bereitgestellt werden, die um einen Stoßdämpfer herum angeordnet sein kann.

Weiter kann das dritte Wandelement in einem weiteren nicht erfindungsgemäßen Beispiel mindestens zwei Wandabschnitte aufweisen, wobei die mindestens zwei Wandabschnitte mittels eines Dichtelements miteinander verbunden sind.

Dabei kann in diesem nicht erfindungsgemäßen Beispiel ein Wandabschnitt mit dem ersten Wandelement verbunden sein und der andere Wandabschnitt mit dem zweiten Wandelement verbunden sein. Auf diese Weise kann eine Kammer bereitgestellt werden, die mehrere Unterkammern aufweist, die durch die einzelnen Wandabschnitte definiert werden. Damit können zum Beispiel größere Bauhöhen für die Vorrichtung mittels Standardteilen für die verformbaren Wandelemente bereitgestellt werden, um Kosten einzusparen.

Die Durchlassöffnung kann in einem weiteren Beispiel verschließbar sein.

Die Menge des inkompressiblen Fluids in der Kammer kann daher nur dann geändert werden, wenn die Durchlassöffnung geöffnet wird. Nach dem Einstellen der Menge des inkompressiblen Fluids in der Kammer kann die Durchlassöffnung verschlossen werden, sodass eine Ein-/Ausbringvorrichtung für das inkompressible Fluid nur dann in Betrieb ist, wenn eine Änderung der Menge des inkompressiblen Fluids in der Kammer bewirkt werden soll.

Gemäß einem weiteren nicht erfindungsgemäßen Beispiel können das erste Wandelement und das zweite Wandelement als mit der Kammer verbundene Platten ausgebildet sein.

Die Platten können in diesem nicht erfindungsgemäßen Beispiel Anschlagplatten sein, mit denen das erste Wandelement bzw. das zweite Wandelement mittels Befestigungsmitteln mit der Fahrzeugkarosserie bzw. dem Federelement verbunden werden können. Dies erleichtert die Verbindung mit der Fahrzeugkarosserie bzw. mit dem Federelement, sodass Installations- und Wartungskosten reduziert werden können.

Erfindungsgemäß weist die Vorrichtung eine Axialführung auf, die das erste Wandelement und das zweite Wandelement in axialer Richtung des Federelements führt. Die Axialführung vermeidet einen radialen Versatz des ersten und zweiten Wandelements zueinander. Sie kann ein Zentrierelement und ein Führungselement aufweisen. Das Zentrierelement ist erfindungsgemäß mit dem ersten Wandelement oder dem zweiten Wandelement verbunden. Das Führungselement ist dann erfindungsgemäß mit dem jeweils anderen Wandelement verbunden. Mit der Axialführung werden Radialkräfte, die aus dem Federelement resultieren auf die gesamte Vorrichtung übertragen. Die Radialkräfte wirken daher nicht nur auf das zweite Wandelement, das diese Kräfte als radiale Scherkräfte auf das dritte Wandelement übertragen würde. Durch die Axialführung wird daher eine Schonung des dritten Wandelements bewirkt und dessen Lebensdauer erhöht.

Die Axialführung ist erfindungsgemäß innerhalb der Kammer angeordnet. Dabei kann das Zentrierelement ein Zentrierstutzen sein und das Führungselement kann ein Führungsstutzen sein. Weiter kann die Axialführung eine Leitung aufweisen, die fluidkommunizierend mit der Durchlassöffnung verbunden ist. Das Zentrierelement oder das Führungselement können dann eine weitere Durchlassöffnung aufweisen, die fluidkommunizierend mit der Leitung verbunden ist.

In einem anderen Beispiel kann die Vorrichtung mindestens zwei Axialführungen aufweisen.

Die Vorrichtung weist erfindungsgemäß ein separates Bauteil auf, das mit dem zweiten Wandelement verbunden ist und eine Aufnahmegeometrie für das Federelement aufweist. Zum Verbinden mit dem zweiten Wandelement weist das separate Bauteil erfindungsgemäß eine Aufnahmegeometrie für das zweite Wandelement auf.

In einem nicht erfindungsgemäßen Beispiel kann die Axialführung außerhalb der Kammer angeordnet sein. Dabei kann die Axialführung das erste Wandelement mit dem zweiten Wandelement oder dem separaten Bauteil verbinden.

Erfindungsgemäß weist das separate Bauteil eine Außenführung für das dritte Wandelement auf. Die Außenführung kann zumindest einen Teil des dritten Wandelements führen und vermeidet einen radialen Versatz des dritten Wandelements oder dessen aufblähen. Dies erhöht die Lebensdauer des dritten Wandelements, insbesondere, wenn das dritte Wandelement als Balg ausgeführt ist. Weiter sind damit dünnere und blähweichere Ausführungsformen des dritten Wandelements möglich. Das dritte Wandelement kann damit kostengünstiger werden und mitunter auch einen höheren Komfort bieten, da es aufgrund einer z. B. geringeren Wandstärke leichter abrollt.

Zu Veranschaulichung wird als nicht erfindungsgemäßes Beispiel ein System zum Federn eines Fahrzeugs beschrieben, wobei das System ein Federelement, eine Vorrichtung nach der vorhergehenden Beschreibung und eine Ein-/Ausbringvorrichtung für das inkompressible Fluid aufweist, wobei das zweite Wandelement mit einem Endstück des Federelements verbunden ist und die Durchlassöffnung mit der Ein-/Ausbringvorrichtung für das inkompressible Fluid fluidkommunizierend verbunden ist.

Gemäß einem nicht erfindungsgemäßen Beispiel weist das System weiter ein Stoßdämpferelement auf, wobei das Federelement und die Vorrichtung um zumindest einen Teilabschnitt des Stoßdämpferelements angeordnet sind.

Damit wird gemäß dem nicht erfindungsgemäßen Beispiel ein Bauteilsatz aus einem Stoßdämpferelement, einem Federelement und einer Vorrichtung zum Verstellen eines Fußpunktes eines Federelements für ein Fahrzeug bereitgestellt, das einfach aufgebaut ist, kostengünstig ist und eine hohe Regelgeschwindigkeit für eine Fahrdynamikregelung aufweist.

Weiter betrifft die Erfindung ein Verfahren zum Verstellen eines Fußpunktes eines Federelements für ein Fahrzeug mittels einer Vorrichtung nach der vorhergehenden Beschreibung unter Verwendung des Fahrzeugs aufweisend eine Fahrzeugkarosserie und eine an der Fahrzeugkarosserie schwenkbar gelagerte Radaufhängung mit einem Federelement und einem Sensor zum Ermitteln eines Winkels zwischen der Fahrzeugkarosserie und der Radaufhängung aufweist, wobei die Vorrichtung und das Federelement zwischen der Fahrzeugkarosserie und der Radaufhängung angeordnet sind, das Verfahren umfassend folgende Schritt: Ermitteln eines Ist-Winkels zwischen der Fahrzeugkarosserie und der Radaufhängung mittels des Sensors; Ermitteln eines Soll-Winkels zwischen der Fahrzeugkarosserie und der Radaufhängung; und Ändern des Volumens der Kammer mittels einer Änderung einer Menge des inkompressiblen Fluids in der Kammer zum Verstellen des Fußpunkts des Federelements, die Kammer aufweisend eine Kammerwand mit mindestens einem sich von dem ersten Wandelement bis zu dem zweiten Wandelement erstreckenden dritten Wandelement, dessen Masse bei einer Änderung des Volumens der Kammer konstant bleibt.

Die Erfindung stellt damit weiter ein schnelles Regelverfahren bereit, um eine Fahrdynamikregelung bereitzustellen. Nach dem Ermitteln des Ist-Winkels zwischen der Fahrzeugkarosserie und der Radaufhängung mittels des Sensors und dem Ermitteln eines Soll-Winkels kann das Volumen der Kammer mittels des inkompressiblen Fluids sehr schnell geändert werden. Damit kann der Fußpunkt des Federelements sehr schnell so verstellt werden, dass der Soll-Winkel zwischen der Radaufhängung der Fahrzeugkarosserie hergestellt wird. Auch Änderungen des Ist-Winkels während der Fahrt können damit ausgeglichen werden.

Weitere Vorteile und Wirkungen sowie Weiterbildungen des Verfahrens ergeben sich aus den Vorteilen und Wirkungen sowie Weiterbildungen der oben beschriebenen Vorrichtung. Es wird daher in dieser Hinsicht auf die vorangegangene Beschreibung verwiesen.

Weitere Merkmale, Einzelheiten und Vorteile der Erfindung ergeben sich aus dem Wortlaut der Ansprüche sowie aus der folgenden Beschreibung von nicht erfindungsgemäßen Beispielen und der erfindungsgemäßen Ausführungsform anhand der Zeichnungen. Es zeigen:

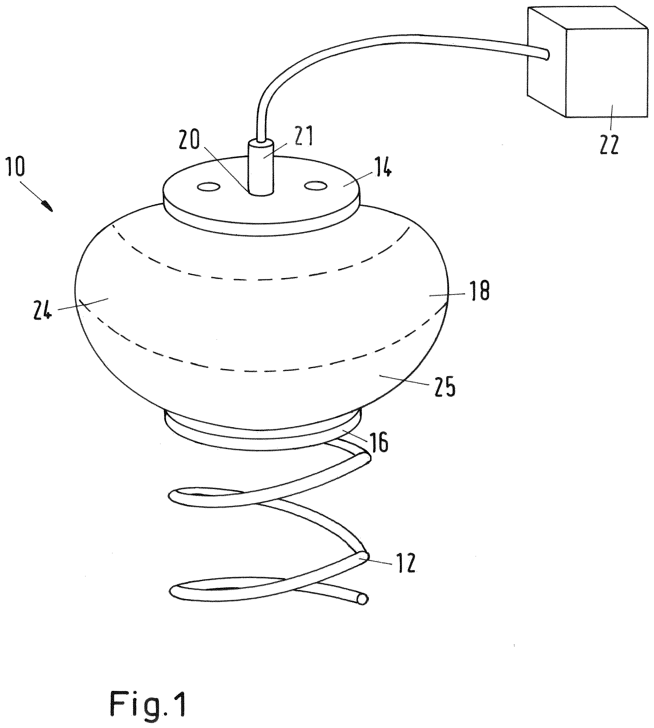

- Fig. 1: eine schematische Darstellung einer Vorrichtung zum Verstellen eines Fußpunktes eines Federelements für ein Fahrzeug;
- Fig. 2a, b: eine schematische Schnitt-Darstellung der Vorrichtung mit verschiedenen Volumina in der Kammer;
- Fig. 3: eine schematische Darstellung eines nicht erfindungsgemäßen Beispiels der Vorrichtung;
- Fig. 4: eine schematische Darstellung eines weiteren nicht erfindungsgemäßen
- Beispiels: der Vorrichtung;
- Fig. 5: eine schematische Darstellung eines weiteren nicht erfindungsgemäßen Beispiels der Vorrichtung;
- Fig. 6a-e: schematische Darstellungen der Vorrichtung in verschiedenen nicht erfindungsgemäßen Beispielen entsprechend der Abbildungen 6a - 6c sowie 6e und dem erfindungsgenmäßen Ausführungsbeispiel entsprechend der Abbildung 6d
- Fig. 7: eine schematische Darstellung des Systems; und
- Fig. 8: ein Flussdiagramm des Verfahrens zum Verstellen eines Fußpunktes eines Federelements für ein Fahrzeug.

Im Folgenden wird die Vorrichtung zum Verstellen eines Fußpunktes eines Federelements für ein Fahrzeug in ihrer Gesamtheit mit dem Bezugszeichen 10 bezeichnet.

Die Vorrichtung 10 umfasst ein erstes Wandelement 14 zum Verbinden mit einem Fahrzeug und ein zweites Wandelement 16 zum Verbinden mit einem Federelement 12. Das erste Wandelement 14 und das zweite Wandelement 16 sind in einem Abstand zueinander angeordnet. Zwischen dem ersten Wandelement 14 und dem zweiten Wandelement 16 ist eine Kammer 18 zum Ändern des Abstands zwischen dem ersten Wandelement 14 und dem zweiten Wandelement 16 angeordnet. Die Kammer 18 ist mit dem ersten Wandelement 14 und dem zweiten Wandelement 16 verbunden. Dabei kann die Kammer 18 das erste Wandelement 14 und das zweite Wandelement 16 umfassen, sodass das erste Wandelement 14 und das zweite Wandelement 16 Teil der Kammer 18 sein können.

Weiter weist die Kammer 18 ein inkompressibles Fluid 27 auf. D. h., die Kammer 18 ist mit dem inkompressiblen Fluid 27 befüllt. Das erste Wandelement 14 und/oder das zweite Wandelement 16 weisen weiter eine Durchlassöffnung 20 für das inkompressible Fluid 27 auf, durch die das inkompressible Fluid 27 in die Kammer 18 eingefüllt oder aus der Kammer 18 entfernt werden kann. Die Durchlassöffnung 20 ist damit fluidkommunizierend mit der Kammer 18 verbunden. Weiter ist die Durchlassöffnung 20 ausgebildet, mit einer Ein-/Ausbringvorrichtung 22 für das inkompressible Fluid 27 verbunden zu werden. Dazu kann ein Ventil 21 an der Durchlassöffnung 20 angeordnet sein.

Das inkompressible Fluid 27 kann z. B. Glykol, eine Glykol-Wasser-Mischung, Bremsflüssigkeit oder ein Hydraulik-Lenkungsöl sein.

Eine Änderung eines Maßes der Kammer 18 zwischen dem ersten Wandelement 14 und dem zweiten Wandelement 16 bewirkt eine Änderung des Abstands zwischen dem ersten Wandelement 14 und dem zweiten Wandelement 16. Der Abstand zwischen dem ersten Wandelement 14 und dem zweiten Wandelement 16 kann mittels der Kammer 18 geändert werden, indem zusätzliches inkompressibles Fluid 27 in die Kammer 18 eingebracht oder inkompressibles Fluid 27 aus der Kammer 18 entfernt wird. Durch die Änderung der Menge des inkompressiblen Fluids 27 in der Kammer 18 ändert sich das Volumen der Kammer 18.

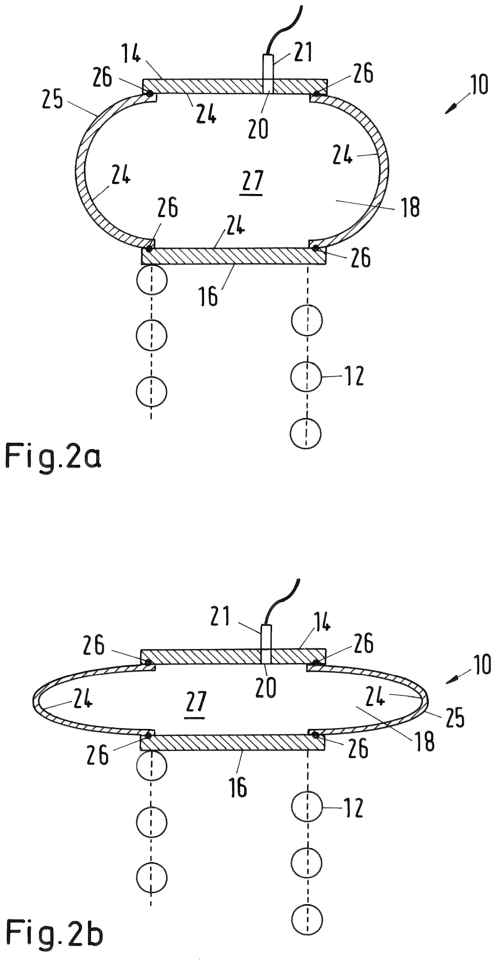

Die Figuren 2a und 2b zeigen dabei unterschiedliche Zustände der Kammer 18 bzw. der Vorrichtung 10. In Figur 2a weist die Kammer 18 ein erstes Volumen auf, während die Kammer 18 in Figur 2b ein zweites Volumen aufweist, das kleiner als das erste Volumen ist. In den Figuren 2a und 2b weist die Kammer 18 damit jeweils eine unterschiedliche Menge inkompressiblen Fluids 27 auf.

Weiter weist die Kammer 18 eine Kammerwand 24 auf, die die Kammer 18 begrenzt. Die Kammerwand 24 weist mindestens ein drittes Wandelement 25 auf, das sich von dem ersten Wandelement 14 bis zum zweiten Wandelement 16 erstreckt. Das dritte Wandelement 25 erstreckt sich dabei unabhängig von dem Volumen der Kammer 18 von dem ersten Wandelement 14 bis zu dem zweiten Wandelement 16. Die Masse des dritten Wandelements 25 ist daher konstant. D. h., eine Änderung des Volumens der Kammer 18 bewirkt keine wesentliche Änderung des Flächeninhalts der Kammerwand 24. Weiter wird zum Ändern des Volumens der Kammer 18 kein Wandelement an die Kammerwand 24 angefügt oder entfernt, das neu in Kontakt mit dem Volumen der Kammer 18 kommt bzw. den Kontakt zu dem Volumen verliert, wie z. B. bei dem Herausziehen bzw. Einschieben eines Stempels einer Hydraulikkammer. Dies ist auch aus den Figuren 2a und 2b ersichtlich, bei denen trotz der unterschiedlichen Volumina das dritte Wandelement 25 die gleiche Masse aufweist und sich in beiden Fällen von dem ersten Wandelement 14 bis zu dem zweiten Wandelement 16 erstreckt.

Dazu kann das dritte Wandelement 25 ein verformbares Wandelement aufweisen, das biegeweich und zugsteif ist. Das verformbare Wandelement erstreckt sich zwischen dem ersten Wandelement 14 und dem zweiten Wandelement 16. Das verformbare Wandelement bildet einen Balg, der sich zwischen dem ersten Wandelement 14 und dem zweiten Wandelement 16 erstreckt. In den folgenden nicht erfindungsgemäßen Beispielen kann das dritte Wandelement 25 jeweils ein verformbares Wandelement aufweisen.

In diesem nicht erfindungsgemäßen Beispiel weist das dritte Wandelement 25 einen C-förmigen Querschnitt auf und erstreckt sich ringförmig um eine zentrale Achse (nicht dargestellt). Das erste Wandelement 14 und das zweite Wandelement 16 verschließen die Öffnungen des Rings, der aus dem dritten Wandelement 25 gebildet wird. Dadurch wird die Kammer 18 definiert. Die Verbindung zwischen dem dritten Wandelement 25 und dem ersten und zweiten Wandelement 16 kann dabei mittels eines Dichtelements 26 erfolgen.

Das dritte Wandelement 25 kann in einem nicht erfindungsgemäßen Beispiel ein fluiddichtes Gewebe sein. Das fluiddichte Gewebe umschließt dabei das inkompressible Fluid 27, das in der Kammer 18 angeordnet ist. Das inkompressible Fluid 27 in der Kammer 18 stabilisiert die Form des fluiddichten Gewebes, sodass ein Abstand zwischen dem ersten Wandelement 14 und im zweiten Wandelement 16 bei konstantem Volumen der Kammer 18 ebenfalls konstant bleibt.

In einem weiteren nicht erfindungsgemäßen Beispiel kann das dritte Wandelement 25 eine gewebe- und/oder faserverstärkte Membran sein. Dies kann zum Beispiel eine armierte Elastomer-Membran sein. Wenn die armierte Elastomer-Membran zwischen einem Federelement 12 und einer Fahrzeugkarosserie 44 bzw. Radaufhängung 46 angeordnet ist, wirkt eine Kraft auf die Elastomer-Membran, die das erste Wandelement und das zweite Wandelement 16 zueinander drückt. Dadurch wird die Elastomer-Membran verformt (siehe Figur 2b), ohne dass ein Flächeninhalt der Elastomer-Membran signifikant geändert wird. Durch das Einbringen von inkompressiblen Fluid 27 wird das Volumen der Kammer 18 vergrößert und die armierte Elastomer-Membran ebenfalls verformt, wobei der gesamte Flächeninhalt der armierten Elastomer-Membran konstant bleibt. Weiter ist eine armierte Elastomer-Membran einfach und kostengünstig herzustellen.

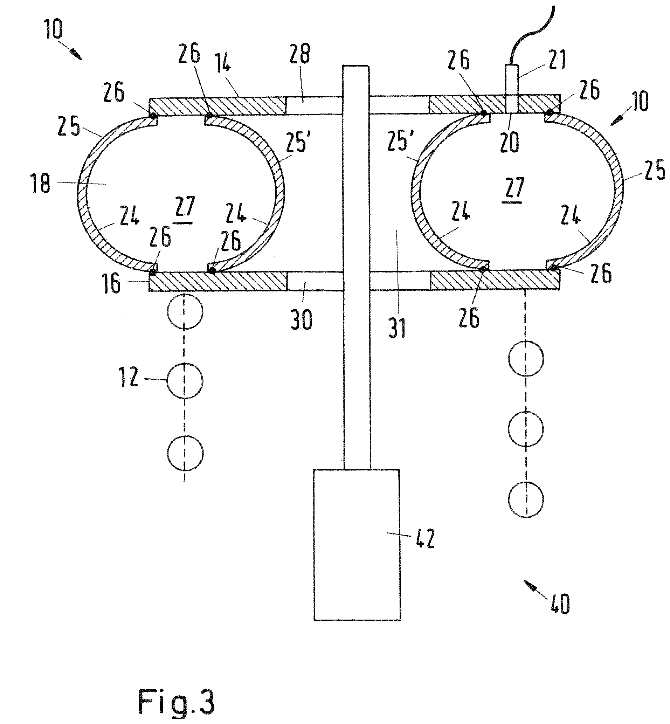

Figur 3 zeigt ein weiteres nicht erfindungsgemäßes Beispiel der Vorrichtung 10. Dabei umfasst die Vorrichtung 10 eine torusförmige Kammer 18. Das dritte Wandelement 25 kann dabei zwei verformbare Wandelemente aufweisen, die einander gegenüberliegend angeordnet sind. Eines der beiden verformbaren Wandelemente erstreckt sich dabei entlang des Außenradius des Torus. Das andere der beiden verformbaren Wandelemente 25' erstreckt sich entlang des Innenradius des Torus.

Die beiden verformbaren Wandelemente sind jeweils mit Dichtelementen 26 mit dem ersten Wandelement 14 und dem zweiten Wandelement 16 verbunden.

Weiter können das erste Wandelement 14 und das zweite Wandelement 16 ringförmig ausgebildet sein. Die Öffnungen 28, 30 der Ringe sind dabei auf der Öffnung 31 des Torus angeordnet. Durch diese Öffnungen 28, 30, 31 kann ein Stoßdämpferelement 42 geführt werden, sodass die Vorrichtung 10 um ein Stoßdämpferelement 42 angeordnet werden kann. Ebenfalls kann ein Federelement 12 damit um das Stoßdämpferelement 42 angeordnet werden. Das Federelement 12, das Stoßdämpferelement 42 und die Vorrichtung 10 können dabei ein System 40 bilden, das als Baugruppe ausgebildet sein kann.

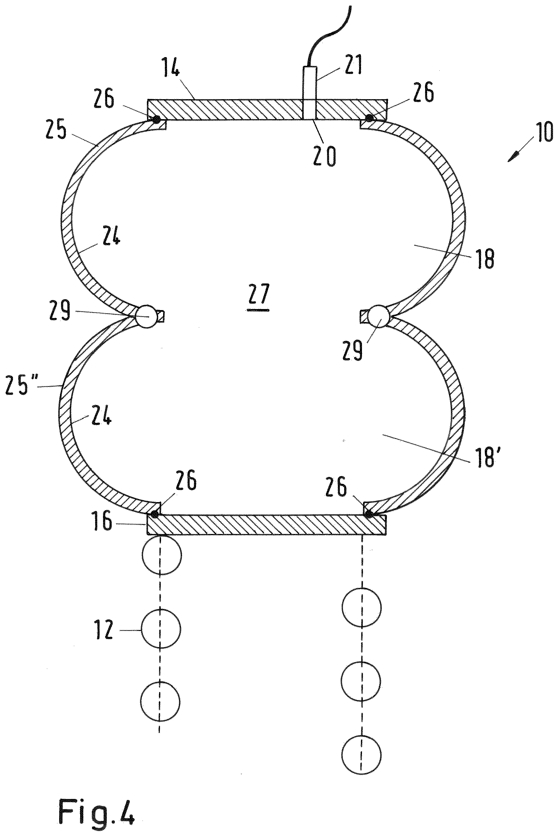

Figur 4 zeigt ein weiteres nicht erfindungsgemäßes Beispiel der Vorrichtung 10. In diesem nicht erfindungsgemäßen Beispiel weist das dritte Wandelement 25 mindestens zwei Wandabschnitte auf, die mittels eines Dichtelements 29 miteinander verbunden sind und verformbare Wandelemente sein können. Dabei ist ein Wandabschnitt mit dem ersten Wandelement 14 über ein Dichtelement 26 verbunden. Der Wandabschnitt 25" ist über ein Dichtelement 26 mit dem zweiten Wandelement 16 verbunden. Die beiden Wandabschnitte definieren dabei zwei Unterkammern 18, 18' der Kammer 18. Auf diese Weise kann der maximale Abstand zwischen dem ersten Wandelement 14 und dem zweiten Wandelement 16 ohne großen Aufwand und ohne die Konstruktion neuer Bauteile mittels der bereits bekannten Bauteile für das dritte Wandelement 25 vergrößert werden.

Die Anzahl der Wandabschnitte kann dabei auch größer als zwei gewählt werden, um den maximalen Abstand zwischen dem ersten Wandelement 14 und dem zweiten Wandelement 16 weiter zu vergrößern.

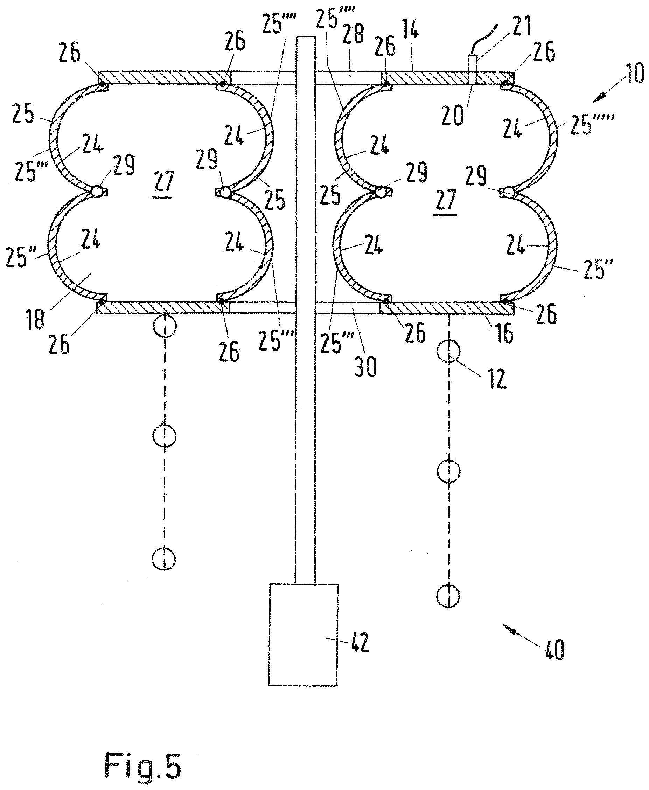

Figur 5 zeigt eine beispielhafte Kombination aus den nicht erfindungsgemäßen Beispielen aus Figur 3 und Figur 4. Dabei ist die Kammer 18 torusförmig ausgebildet und weist zwei einander gegenüberliegende dritte Wandelemente 25 auf. Beide dritten Wandelemente 25, weisen in diesem Beispiel jeweils zwei Wandabschnitte auf, die mittels eines Dichtelements 29 miteinander verbunden sind. Jeweils einer der beiden Wandabschnitte 25"", 25‴ʺ eines dritten Wandelements 25 ist mit dem ersten Wandelement 14 über ein Dichtelement 26 verbunden. Der andere der beiden Wandabschnitte 25", 25‴ eines dritten Wandelements 25 ist jeweils mit dem zweiten Wandelement 16 über ein Dichtelement 26 verbunden.

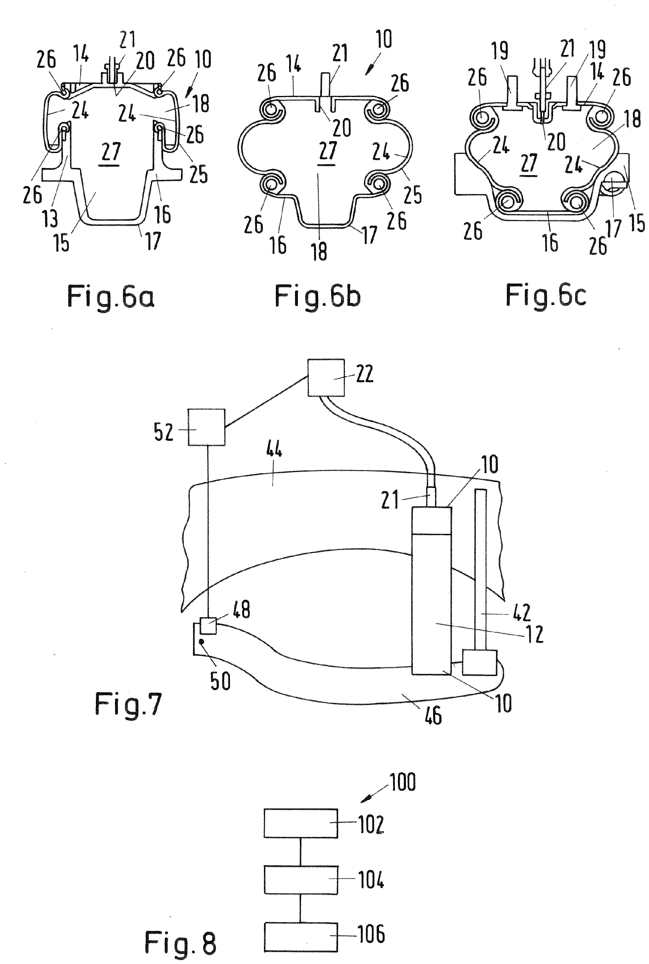

Die Figuren 6a bis 6c zeigen verschiedene nicht erfindungsgemäße Beispiele der Kammer 18 und der ersten und zweiten Wandelemente 16.

Figur 6a zeigt dabei eine Kammer 18 mit einem verformbaren Wandabschnitt, der über einen Flansch des zweiten Wandelements 16 hängend angeordnet ist. Das zweite Wandelement 16 ist dabei U-förmig ausgebildet und weist eine Aufnahmegeometrie 17 für ein Federelement 12 auf. Dabei wird ein Großteil der Kammer 18 durch ein von einem Flansch 13 des zweiten Wandelements 16 umschlossenes Volumen ausgebildet. Wenn die Menge des inkompressiblen Fluids 27 in der Kammer 18 erhöht wird, wird das dritte Wandelement 25 zwischen dem ersten Wandelement 14 und dem zweiten Wandelement 16 gespannt, bis der hängende Teil des dritten Wandelements 25 sich über das zweite Wandelement 16 gehoben hat. Da das dritte Wandelement 25 nicht dehnbar ausgebildet ist, ist damit der maximale Abstand zwischen dem ersten Wandelement 14 und dem zweiten Wandelement 16 erreicht.

Figur 6b zeigt ein weiteres nicht erfindungsgemäßes Beispiel der Vorrichtung 10, bei der das zweite Wandelement 16 aus einer Platte ausgebildet ist, in die eine Aufnahmegeometrie 17 für das Federelement 12 ausgeformt ist.

Figur 6c zeigt ein weiteres nicht erfindungsgemäßes Beispiel der Vorrichtung 10, bei der eine Aufnahmegeometrie 17 für das Federelement 12 durch ein separates Bauteil 15 bereitgestellt wird, das zusätzlich eine Aufnahmegeometrie für das zweite Wandelement 16 und einen Teil des dritten Wandelements 25 aufweist. Weiter sind in dieser Darstellung Befestigungsmittel 19 am ersten Wandelement 14 dargestellt, mit der das erste Wandelement 14 an einer Fahrzeugkarosserie 44 oder eine Radaufhängung 46 befestigt werden kann.

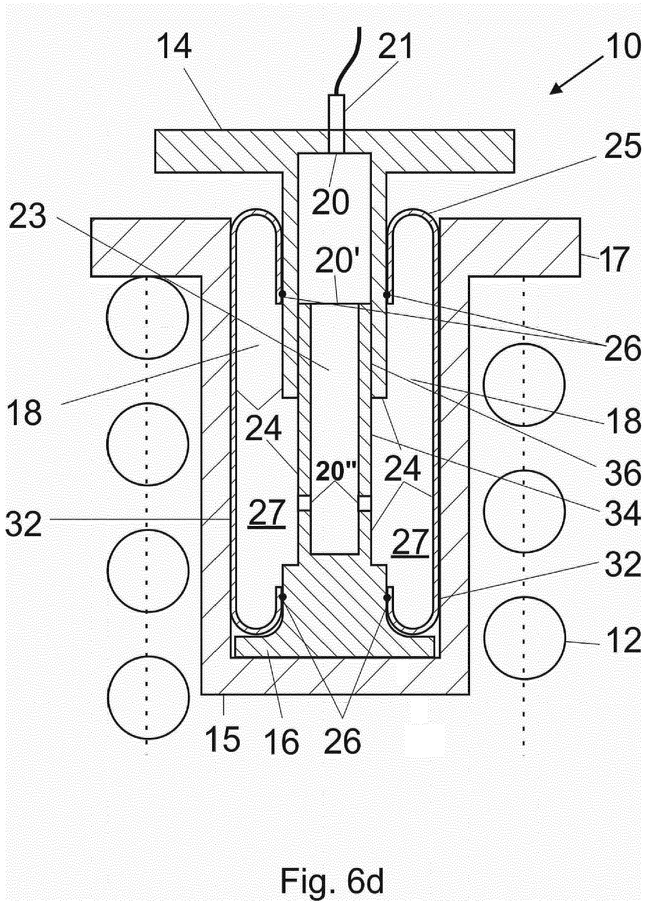

Figur 6d zeigt die erfindungsgemäße Ausführungsform der Vorrichtung 10. In dieser Ausführungsform weist das separate Bauteil 15 eine Außenführung 32 für das dritte Wandelement 25 auf, die sich über das Federelement 12 erstreckt. Damit weist die Außenführung 32 eine höhere Stützwirkung als in der Ausführungsform nach Figur 6c auf.

Weiter weist die erfindungsgemäße Ausführungsform eine Axialführung auf, die ein Zentrierelement 34 und ein Führungselement 36 aufweist. Das Führungselement 36 ist zum Führen des Zentrierelements 34 in axialer Richtung des Federelements 12 ausgebildet. Dazu ist erfindungsgemäß das Zentrierelement 34 gleitend mit dem Führungselement 36 verbunden. Weiter ist erfindungsgemäß das Zentrierelement 34 mit dem ersten oder zweiten Wandelement 14, 16 verbunden. Das Führungselement 36 ist dann mit dem jeweils anderen Wandelement 14, 16 verbunden. In dieser erfindungsgemäßen Ausführungsform ist die Axialführung in der Kammer 18 angeordnet. Das dritte Wandelelement 25 erstreckt sich um die Axialführung.

Das Zentrierelement 34 und das Führungselement 36 können weiter eine Leitung 23 für das inkompressible Fluid 27 bilden, die fluidkommunizierend mit dem Ventil 21 verbunden ist. In diesem Beispiel ist das Ventil 21 an dem ersten Wandelement 14 angeordnet und über eine Durchlassöffnung 20 mit der Leitung 23 verbunden. Die Leitung 23 weist an dem Zentrierelement 34 weitere Durchlassöffnungen 20' und 20" auf, über die das inkompressible Fluid 27 in die Kammer 18 strömen kann.

In dieser erfindungsgemäßen Ausführungsform kann das Zentrierelement 34 ein Zentrierstutzen sein. Weiter kann das Führungselement 36 ein Führungsstutzen sein.

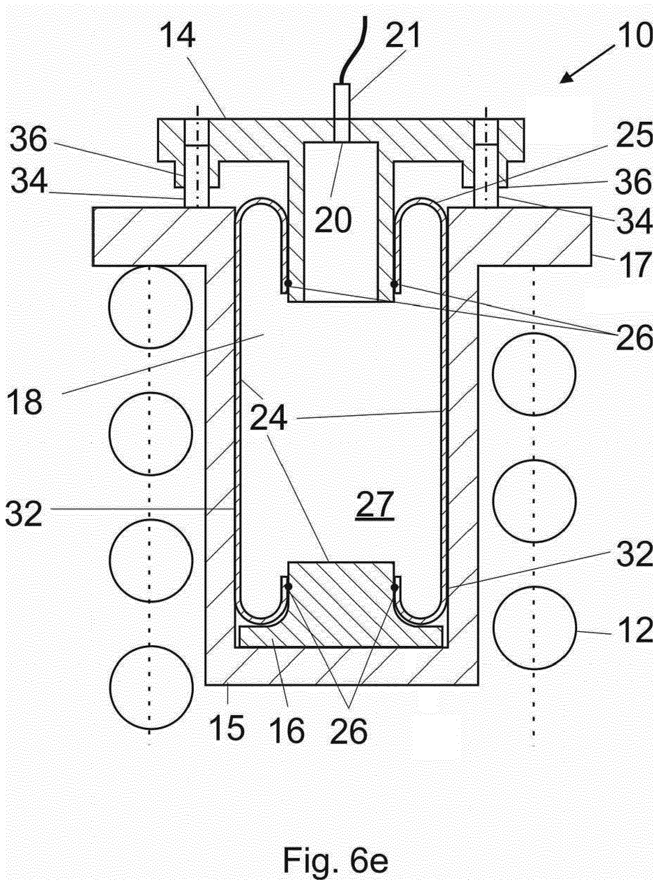

Figur 6e zeigt ein weiteres nicht erfindungsgemäßes Beispiel der Vorrichtung 10. Dieses nicht erfindungsgemäße Beispiel kann ebenfalls das separate Bauteil 15 aufweisen. Anders als in der erfindunsgemäßen Ausführungsform nach Figur 6d weist die Vorrichtung mindestens zwei Axialführungen auf. Dazu ist das erste Wandelement 14 über die Axialführungen außerhalb der Kammer 18 mit dem zweiten Wandelement 16 oder dem separaten Bauteil 15 verbunden. Das dritte Wandelement 25 erstreckt sich in diesem Beispiel nicht um die Axialführung.

Auch in diesem nicht erfindungsgemäßen Beispiel kann das Zentrierelement 34 mit dem ersten Wandelement 14 oder dem zweiten Wandelement 16 bzw. dem separaten Bauteil 15 verbunden sein. Das Führungselement 36 ist dann mit dem jeweils anderen Wandelement 14, 16 bzw. dem separaten Bauteil verbunden.

Es sei angemerkt, dass die Axialführung mit dem Zentrierelement 34 und dem Führungselement 36 mit jedem der oben genannten Beispiele kombiniert werden kann. Weiter kann die Axialführung unabhängig von der Außenführung 32 verwendet werden.

In Figur 7 ist ein System 40 dargestellt, das ein Federelement 12, ein Stoßdämpferelement 42 und eine Vorrichtung 10 zum Verstellen eines Fußpunktes eines Federelements 12 eines Fahrzeugs aufweist. Weiter dargestellt sind ein Teil einer Fahrzeugkarosserie 44 und eine Radaufhängung 46 mit einem Sensor 48, z. B. einem Drehwinkelsensor. Die Radaufhängung 46 ist über eine Achse 50 schwenkbar mit der Fahrzeugkarosserie 44 verbunden. Der Sensor 48 misst dabei den Winkel zwischen Radaufhängung 46 und der Fahrzeugkarosserie 44 an der Achse 50. Weiter kann eine Steuereinheit 52 Signale von dem Sensor 48 empfangen, um den Winkel zwischen der Radaufhängung 46 und der Fahrzeugkarosserie 44 zu ermitteln.

Das Federelement 12 und das Stoßdämpferelement 42 sind zwischen der Fahrzeugkarosserie 44 und der Radaufhängung 46 angeordnet. Dabei ist die Vorrichtung 10 zwischen der Fahrzeugkarosserie 44 und dem Federelement 12 und/oder zwischen dem Federelement 12 und der Radaufhängung 46 angeordnet. Mittels der Vorrichtung 10 kann bei einer Stauchung des Federelements 12 der Abstand zwischen der Radaufhängung 46 und der Fahrzeugkarosserie 44 verändert werden. Dabei wird ebenfalls der Winkel zwischen der Radaufhängung 46 und der Fahrzeugkarosserie 44 geändert.

Die Abstandsänderung mittels der Vorrichtung 10 wird durch das Einbringen bzw. das Ausbringen von inkompressiblen Fluid 27 in die Vorrichtung 10 bewirkt. Dazu ist eine Ein-/Ausbringvorrichtung 22 vorgesehen, die das inkompressible Fluid 27 in die Kammer 18 der Vorrichtung 10 ein- bzw. ausbringen kann. Die Ein-/Ausbringvorrichtung 22 kann zum Beispiel eine Pumpe für das inkompressible Fluid sein. Weiter ist die Ein-/Ausbringvorrichtung 22 mit der Steuereinheit 52 verbunden, sodass die Steuereinheit 52 Steuersignale an die Ein-/Ausbringvorrichtung 22 übermitteln kann.

Dabei kann die Steuereinheit 52 das Verfahren 100 zum Verstellen eines Fußpunktes eines Federelements 12 für ein Fahrzeug verwenden. Gemäß dem Verfahren 100 wird, wie in Figur 8 dargestellt, in einem ersten Schritt 102 ein Ist-Winkel zwischen der Fahrzeugkarosserie 44 untere Aufhängung mittels des Sensors 48 ermittelt. Weiter ermittelt die Steuereinheit 52 in einem weiteren Schritt 104 einen Soll-Winkel zwischen der Fahrzeugkarosserie 44 und der Radaufhängung 46. Um den Ist-Winkel auf den Soll-Winkel zu regeln, übermittelt die Steuereinheit 52 Steuersignale an die Ein-/ Ausbringvorrichtung 22, mit der das Volumen der Kammer 18 in einem Schritt 106 mittels einer Änderung einer Menge des inkompressiblen Fluids 27 in der Kammer 18 geändert wird. Dabei wird der Fußpunkt des Federelements 12 verstellt, wobei die Kammer 18 eine Kammerwand 24 mit mindestens einem sich von dem ersten Wandelement 14 bis zu dem zweiten Wandelement 16 erstreckenden dritten Wandelement 25 aufweist, dessen Masse bei einer Änderung des Volumens der Kammer 18 konstant bleibt.

Die Erfindung ist nicht auf eine der vorbeschriebenen Ausführungsformen beschränkt, sondern in vielfältiger Weise innerhalb der jeweiligen Schutzbereiche der unabhängigen Ansprüche 1 und 6 abwandelbar.

## Patentansprüche

1. Vorrichtung zum Verstellen eines Fußpunktes eines Federelements (12) für ein Fahrzeug, die Vorrichtung (10) umfassend ein erstes Wandelement (14) zum Verbinden mit einem Fahrzeug, ein zweites in einem Abstand zum ersten Wandelement (14) angeordnetes Wandelement zum Verbinden mit dem Federelement (12), und eine zwischen dem ersten Wandelement (14) und dem zweiten Wandelement (16) angeordnete Kammer (18) zum Ändern des Abstands zwischen dem ersten Wandelement (14) und dem zweiten Wandelement (16) mittels einer Änderung eines Volumens der Kammer (18), wobei die Kammer (18) ein inkompressibles Fluid (27) aufweist und das erste und/ oder zweite Wandelement (16) eine Durchlassöffnung (20) für das inkompressible Fluid (27) zur Kammer (18) umfasst, wobei die Durchlassöffnung (20) mit einer Ein-/Ausbringvorrichtung (22) für das inkompressible Fluid (27) zum Ändern des Volumens der Kammer (18) fluidkommunizierend verbindbar ist, wobei die Kammer (18) eine Kammerwand (24) mit mindestens einem sich von dem ersten Wandelement (14) bis zu dem zweiten Wandelement (16) erstreckenden dritten Wandelement (25) aufweist, dessen Masse bei einer Änderung des Volumens der Kammer (18) konstant ist, wobei die Vorrichtung (10) weiter eine Axialführung aufweist, die in der Kammer (18) angeordnet ist und die ein Zentrierelement (34) und ein Führungselement (36) aufweist, wobei das Führungselement (36) zum Führen des Zentrierelements (34) in axialer Richtung des Federelements (12) ausgebildet ist und das Zentrierelement (34) gleitend mit dem Führungselement (36) verbunden ist, wobei weiter das Zentrierelement (34) mit dem ersten oder zweiten Wandelement (14, 16) verbunden ist und das Führungselement (36) mit dem jeweils anderen Wandelement (14, 16) verbunden ist, und wobei sich das dritte Wandelement (25) um die Axialführung erstreckt, **dadurch gekennzeichnet, dass** die Vorrichtung (10) weiter ein separates Bauteil (15) aufweist, das eine Aufnahmegeometrie (17) für das Federelement (12), eine zusätzliche Aufnahmegeometrie für das zweite Wandelement (16) und einen Teil des dritten Wandelements (25), und eine Außenführung (32) für das dritte Wandelement (25), die sich über das Federelement (12) erstreckt, aufweist.

2. Vorrichtung nach Anspruch 1, **dadurch gekennzeichnet, dass** das dritte Wandelement (25) mindestens ein verformbares Wandelement aufweist, das biegeweich und zugsteif ist und sich zwischen dem ersten Wandelement (14) und dem zweiten Wandelement (16) erstreckt.

3. Vorrichtung nach Anspruch 1 oder 2, **dadurch gekennzeichnet, dass** das dritte Wandelement (25) jeweils mittels eines Dichtelements (26) mit dem ersten Wandelement (14) und dem zweiten Wandelement (16) verbunden ist.

4. Vorrichtung nach einem der Ansprüche 1 bis 3, **dadurch gekennzeichnet, dass** das mindestens eine dritte Wandelement (25) ein fluiddichtes Gewebe oder eine gewebe- und/oder faserverstärkte Membran, vorzugsweise eine armierte Elastomer-Membran, aufweist.

5. Vorrichtung nach einem der Ansprüche 1 bis 4, **dadurch gekennzeichnet, dass** die Durchlassöffnung (20) verschließbar ist.

6. Verfahren zum Verstellen eines Fußpunktes eines Federelements für ein Fahrzeug mittels einer Vorrichtung nach einem der vorhergehenden Ansprüche unter Verwendung des Fahrzeugs aufweisend eine Fahrzeugkarosserie und eine an der Fahrzeugkarosserie schwenkbar gelagerte Radaufhängung mit einem Federelement und einem Sensor zum Ermitteln eines Winkels zwischen der Fahrzeugkarosserie und der Radaufhängung, wobei die Vorrichtung und das Federelement zwischen der Fahrzeugkarosserie und der Radaufhängung angeordnet sind, das Verfahren (100) umfassend folgende Schritt:
- Ermitteln (102) eines Ist-Winkels zwischen der Fahrzeugkarosserie und der Radaufhängung mittels des Sensors;
- Ermitteln (104) eines Soll-Winkels zwischen der Fahrzeugkarosserie und der Radaufhängung; und
- Ändern (106) des Volumens der Kammer mittels einer Änderung einer Menge des inkompressiblen Fluids in der Kammer zum Verstellen des Fußpunkts des Federelements, die Kammer aufweisend eine Kammerwand mit mindestens einem sich von dem ersten Wandelement bis zu dem zweiten Wandelement erstreckenden dritten Wandelement, dessen Masse bei einer Änderung des Volumens der Kammer konstant bleibt.

## Claims

1. A device for adjusting a base of a spring element (12) for a vehicle, the device (10) comprising a first wall element (14) for connection to a vehicle, a second wall element (16) spaced from the first wall element (14) for connection to the spring element (12), and a chamber (18) disposed between the first wall element (14) and the second wall element (16) for changing the distance between the first wall element (14) and the second wall element (16) by changing a volume of the chamber (18),wherein the chamber (18) comprises an incompressible fluid (27) and the first and/or second wall element (16) comprises a passage opening (20) for the incompressible fluid (27) to the chamber (18), the passage opening (20) being fluidly communicably connectable to an input/output device (22) for the incompressible fluid (27) for changing the volume of the chamber (18), wherein the chamber (18) has a chamber wall (24) with at least one third wall element (25) extending from the first wall element (14) to the second wall element (16), the mass of the third wall element (25) being constant when the volume of the chamber (18) is changed, wherein the device (10) further comprises an axial guide being arranged in the chamber (18) and comprising a centering element (34) and a guide element (36), wherein the guide element (36) is configured to guide the centering element (34) in axial direction of the spring element (12) and the centering element (34) is slidingly connected to the guide element (36), wherein the centering element (34) is connected to the first or the second wall element (14, 16) and the guide element (36) is connected to the respective other wall element (14, 16) and wherein the third wall element (25) extends around the axial guide, **characterized in that** the device (10) further comprises a separate element (15) which has a receiving geometry (17) for the spring element (12), an additional receiving geometry for the second wall element (16) and a part of the third wall element (25), and an outer guide (32) for the third wall element (25), which extends over the spring element (12).

2. Device according to claim 1, **characterized in that** the third wall element (25) comprises at least one formable wall element which is flexible and stiff in tension and extends between the first wall element (14) and the second wall element (16).

3. Device according to claim 1 or 2, **characterized in that** the third wall element (25) is connected to the first wall element (14) and the second wall element (16) in each case by means of a sealing element (26).

4. Device according to any of claims 1 to 3, **characterized in that** the at least one third wall element (25) comprises a fluid-tight fabric or a fabric- and/or fiber-reinforced membrane, preferably a reinforced elastomeric membrane.

5. Device according to any of claims 1 to 4, **characterized in that** the passage opening (20) can be closed.

6. A method of adjusting a base of a spring element for a vehicle by means of an apparatus according to any one of the preceding claims, by using the vehicle having a vehicle body and a wheel suspension swivel-mounted on the vehicle body and having a spring element and a sensor for detecting an angle between the vehicle body and the wheel suspension, the device and the spring element being disposed between the vehicle body and the wheel suspension, the method (100) comprising the following step:
- Determination (102) of an actual angle between the vehicle chassis and the wheel suspension by means of the sensor;
- Determination (104) of a desired angle between the vehicle body and the wheel suspension; and
- Changing (106) the volume of the chamber by changing an amount of incompressible fluid in the chamber to adjust the base of the spring element, the chamber comprising a chamber wall having at least one third wall element extending from the first wall element to the second wall element, the mass of the third wall element remaining constant as the volume of the chamber is changed.

## Revendications

1. Dispositif d'ajustement d'un point de base d'un élément de ressort (12) pour un véhicule, le dispositif (10) comprenant un premier élément de paroi (14) destiné à être relié à un véhicule, un deuxième élément de paroi disposé à une certaine distance du premier élément de paroi (14) destiné à être relié à l'élément de ressort (12), et une chambre (18) disposée entre le premier élément de paroi (14) et le deuxième élément de paroi (16) pour modifier la distance entre le premier élément de paroi (14) et le deuxième élément de paroi (16) au moyen d'une modification d'un volume de la chambre (18), dans lequel la chambre (18) comprend un fluide incompressible (27) et le premier et/ou le deuxième élément de paroi (16) comprend une ouverture de passage (20) pour le fluide incompressible (27) vers la chambre (18), l'ouverture de passage (20) pouvant être reliée en communication de fluide avec un dispositif d'introduction/d'application (22) pour le fluide incompressible (27) afin de modifier le volume de la chambre (18), la chambre (18) présentant une paroi de chambre (24) avec au moins un troisième élément de paroi (25) s'étendant du premier élément de paroi (14) jusqu'au deuxième élément de paroi (16), dont la masse est constante lors d'une modification du volume de la chambre (18), le dispositif (10) comprenant en outre un guide axial qui est disposé dans la chambre (18) et qui comprend un élément de centrage (34) et un élément de guidage (36), l'élément de guidage (36) étant conçu pour guider l'élément de centrage (34) dans la direction axiale de l'élément de ressort (12) et l'élément de centrage (34) étant relié de manière coulissante à l'élément de guidage (36), l'élément de centrage (34) étant en outre relié au premier ou au deuxième élément de paroi (14, 16) et l'élément de guidage (36) est relié à l'autre élément de paroi respectif (14, 16), et le troisième élément de paroi (25) s'étendant autour du guidage axial, **caractérisé en ce que** le dispositif (10) présente en outre un composant séparé (15), qui présente une géométrie de réception (17) pour l'élément de ressort (12), une géométrie de réception supplémentaire pour le deuxième élément de paroi (16) et une partie du troisième élément de paroi (25), et un guidage extérieur (32) pour le troisième élément de paroi (25), qui s'étend sur l'élément de ressort (12).

2. Dispositif selon la revendication 1, **caractérisé en ce que** le troisième élément de paroi (25) comprend au moins un élément de paroi déformable qui est souple en flexion et rigide en traction et qui s'étend entre le premier élément de paroi (14) et le deuxième élément de paroi (16).

3. Dispositif selon la revendication 1 ou 2, **caractérisé en ce que** le troisième élément de paroi (25) est relié respectivement au premier élément de paroi (14) et au deuxième élément de paroi (16) au moyen d'un élément d'étanchéité (26).

4. Dispositif selon l'une des revendications 1 à 3, **caractérisé en ce que** ledit au moins un troisième élément de paroi (25) comprend un tissu étanche aux fluides ou une membrane renforcée par un tissu et/ou des fibres, de préférence une membrane élastomère armée.

5. Dispositif selon l'une des revendications 1 à 4, **caractérisé en ce que** l'ouverture de passage (20) peut être obturée.

6. Procédé d'ajustement d'un point de base d'un élément de ressort pour un véhicule au moyen d'un dispositif selon l'une quelconque des revendications précédentes, en utilisant le véhicule présentant une carrosserie de véhicule et une suspension de roue montée de manière pivotante sur la carrosserie de véhicule avec un élément de ressort et un capteur pour déterminer un angle entre la carrosserie de véhicule et la suspension de roue, le dispositif et l'élément de ressort étant disposés entre la carrosserie de véhicule et la suspension de roue, le procédé (100) comprenant les étapes suivantes :
- déterminer (102) un angle réel entre la carrosserie du véhicule et la suspension de roue au moyen du capteur ;
- déterminer (104) un angle cible entre la carrosserie du véhicule et la suspension de roue ; et
- modifier (106) le volume de la chambre en modifiant une quantité du fluide incompressible dans la chambre pour ajuster la base de l'élément de ressort, la chambre comprenant une paroi de chambre avec au moins un troisième élément de paroi s'étendant du premier élément de paroi au deuxième élément de paroi, dont la masse reste constante lors d'une modification du volume de la chambre.
